# EUROPEAN PATENT SPECIFICATION

(11) **EP 0 393 771 B1**
(45) Date of publication and mention of the grant of the patent: **20.07.1994**
(21) Application number: 90200920.8
(22) Date of filing: 13.04.1990
(51) Int. Cl.: A01J 25/16

(54) **Device for bearing a perishable foodstuff, in particular a cheese**
Vorrichtung zum Tragen von verderblichen Nahrungsmitteln, insbesondere Käse
Dispositif support pour produits alimentaires périssables, en particulier de fromage

(30) Priority: 17.04.1989 NL 8900957
(43) Date of publication of application: 24.10.1990
(73) Proprietor: DOOITZE DE JONG HOLDING B.V., NL-8223 CP Lelystad (NL)
(72) Inventor: de Jong, D., NL-8223 CP Lelystad (NL)
(74) Representative: Louet Feisser, Arnold

(56) References cited:
- EP-A- 0 344 844
- CH-A- 408 521
- CH-A- 494 529
- DE-C- 900 889
- GB-A- 2 142 216
- NL-A- 6 712 209
- NL-A- 8 301 954

## Description

The invention relates to a device for bearing a perishable foodstuff, in particular a cheese, provided with at least one bearing tray which is permeable to gas for allowing gas to gain access from the bottom side of the bearing tray, through the bearing tray to the foodstuff to be placed on the bearing tray, the device being provided with a structure with at least one frame in which the bearing tray is moveably arranged in a horizontal plane.

Such device is described in GB-A-2,142,216. The described device is a storage structure for cheeses having a frame including vertical side walls which are provided at equal vertical intervals with supporting grooves, which form guides for slidingly receiving the extremities of shelves or bearing trays. The side walls are hollow to constitute air ducts for supply of ventilation air to the cheese storage spaces. In fact, the shelves according to GB-A-2,142,216 operate like the drawers of a chest of drawers: they can be slided forward and backward to ensure easy insertion and removal of the cheeses on the shelves.

The present invention provides a device for bearing a perishable foodstuff, of which cleaning is facilitated and whereby the bearing tray can be loaded with greater weights.

To achieve these goals the invention is characterized in that the bearing tray is connected detachably to the frame by providing the frame with profiled edgings and by providing the bearing tray along at least a part of its longitudinal sides with a profile which clamps with the profiled edgings of the frame when the bearing tray is fitted in said frame.

Such a structure may, for instance, be a steel rack in which mutually spaced horizontal steel frames with bearing trays fitted inside have been mounted. To facilitate cleaning of the bearing tray especially, this tray is connected detachably to the frame.

As the bearing tray thus is connected along at least a part of its longitudinal sides to the profiled edgings of the frame under a certain tensile stress, by means of the aforesaid clamping profile, the bearing tray can be loaded with greater cheese weights. Preferably the profiled edgings are provided with a profile corresponding to the profile of the bearing tray, resulting in a clamping connection.

A further embodiment of a device according to the invention is characterized in that the profiled eding of the frame has a substantially rectangular cross-sectional area.

A further embodiment of a device according to the invention is characterized in that the bearing tray is provided with knobs projecting above its top surface.

If the bearing tray is provided with perforations, these knobs are preferably disposed between the perforations, so that substantially the whole bottom of a cheese placed on the bearing tray is freely accessible to, for instance, purified air.

The invention will now be further elucidated with reference to the accompanying figures, in which
figure 1 depicts a bearing tray according to the invention which is provided along at least a part of its longitudinal sides with two profiles having a substantially round cross-sectional area;
figure 2 represents the bearing tray of figure 1 under conditions where the bearing tray has been incorporated in a diagrammatically sketched frame;
figure 3 shows a bearing tray according to the invention which is provided along at least a part of its longitudinal sides with two profiles having a substantially rectangular cross-sectional area;
figure 4 represents a structure with on the one hand cheese shelves according to the state of the art and on the other hand frames incorporating bearing trays according to figures 1 or 3;

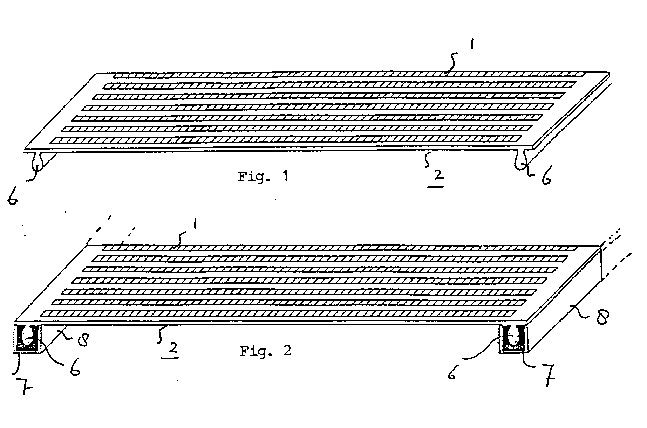

Figure 1 represents a bearing tray 2, containing perforations 1, with round profiles 6, which under conditions where the bearing tray 2 has been fitted in a horizontal frame 9 of a structure interlock with a corresponding profile 7 of the edges 8 of frame 9 (figure 2). In this figure 2 the frame 9 with edges 8 is sketched only diagrammatically. Figure 4 schematically shows how the bearing tray 2 of figure 1 has been accommodated in the frame 9 which has been mounted in a structure.

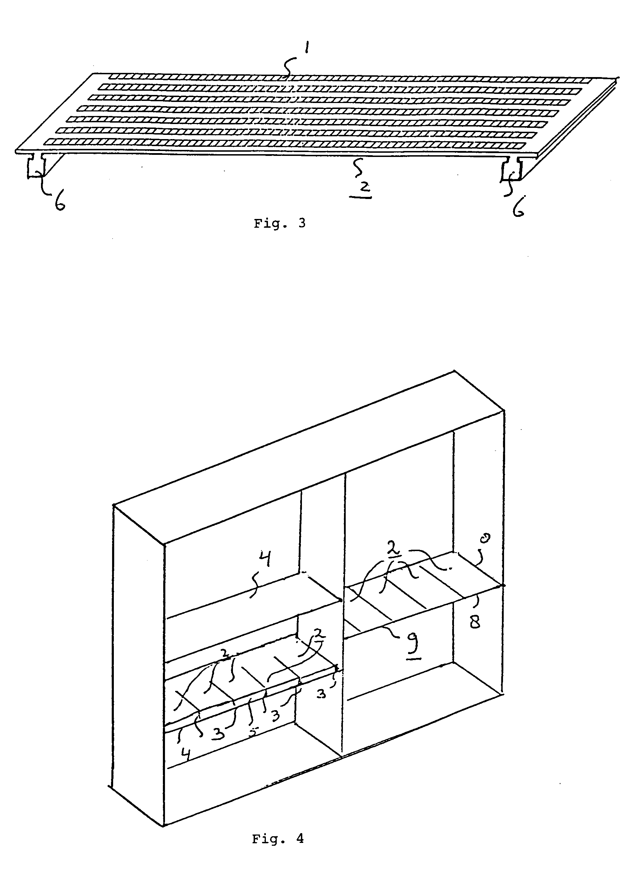

Figure 3 represents a bearing tray 2 according to the invention with substantially rectangular profiles 6. Under conditions where such a bearing tray 2 is accommodated in a frame of a structure, the said rectangular profiles 6 clamp with corresponding rectangular profiles of the edges of the frame.

Preferably, knobs are disposed between the perforations 1, so that substantially the whole bottom of a cheese placed on the bearing tray is freely accessible to, for instance, purified air.

## Claims

1. A device for bearing a perishable foodstuff, in particular a cheese, provided with at least one bearing tray (2) which is permeable to gas for allowing gas to gain access from the bottom side of the bearing tray (2), through the bearing tray (2) to the foodstuff to be placed on the bearing tray (2), the device being provided with a structure with at least one frame in which the bearing tray is moveably arranged in a horizontal plane, characterized in that the bearing tray (2) is connected detachably to the frame (9) by providing the frame with profiled edgings (8) and by providing the bearing tray (2) along at least a part of its longitudinal sides with a profile (6) which clamps with the profiled edgings (8) of the frame (9) when the bearing tray (2) is fitted in said frame (9).

2. A device according to claim 1, characterized in that the profiled edging (8) of the frame (9) has a substantially rectangular cross-sectional area.

3. A device according to any one of the preciding claims, characterized in that the bearing tray (2) is provided with knobs (10) projecting above its top surface.

4. A bearing tray (2) for use in a device according to any of the preceding claims, which bearing tray (2) is permeable to gas for allowing gas to gain acces from the bottom side of the bearing tray (2), through the bearing tray (2) to the foodstuff to be placed on the bearing tray (2), which bearing tray is provided with means to arrange the tray moveably and in a horizontal plane in a frame (9) belonging to a structure of the said device, characterized in that the bearing tray (2) is provided along at least a part of its longitudinal sides with a profile (6) for clamping with the profiled edgings (8) of the frame (9) when the bearing tray (2) is fitted in said frame (9), the profile having a body portion attached to the bottom side of the bearing tray by a neck portion of smaller width than said body portion, the bearing tray (2) being connectable detachably to the frame (9) being provided with said profiled edgings (8) by means of said profile.

## Patentansprüche

1. Vorrichtung zum Tragen eines verderblichen Lebensmittels, insbesondere von Käse, die mit wenigstens einem Tragbrett (2) versehen ist, welches für ein Gas durchlässig ist, um dem Gas einen Zugang von der Bodenseite des Tragbretts (2) durch das Tragbrett (2) zu dem auf dem Tragbrett (2) aufgebrachten Lebensmittel zu erlauben, wobei die Vorrichtung mit einer Struktur mit wenigstens einem Rahmen versehen ist, in dem das Tragbrett in einer horizontalen Ebene beweglich angeordnet ist, dadurch gekennzeichnet, daß das Tragbrett (2) durch Versehen des Rahmens mit profilierten Einfassungen (8) und durch Versehen des Tragbretts (2) entlang wenigstens einem Teil seiner Längsseiten mit einem Profil (6), das mit den profilierten Einfassungen (8) des Rahmens (9) klemmt, wenn das Tragbrett (2) in den Rahmen (9) eingesetzt ist, lösbar mit dem Rahmen (9) verbunden ist.

2. Vorrichtung nach Anspruch 1, dadurch gekennzeichnet, daß die profilierte Einfassung (8) des Rahmens (9) eine im wesentlichen rechteckige Querschnittsfläche hat.

3. Vorrichtung nach einem der vorangehenden Ansprüche, dadurch gekennzeichnet, daß das Tragbrett (2) mit Knöpfen (10) versehen ist, die über seine obere Fläche hinausragen.

4. Ein Tragbrett (2) zur Verwendung in einer Vorrichtung nach einem der vorangehenden Ansprüche, wobei das Tragbrett (2) für Gas durchlässig ist, um dem Gas den Zugang von der Bodenseite des Tragbretts (2) durch das Tragbrett (2) hindurch zu dem auf dem Tragbrett (2) aufgebrachten Lebensmittel zu erlauben, wobei das Tragbrett mit Mitteln zum beweglichen Anordnen des Tragbretts in einer horizontalen Ebene in einem zu dem Aufbau der genannten Vorrichtung gehörenden Rahmen (9) versehen ist, dadurch gekennzeichnet, daß das Tragbrett (2) entlang wenigstens eines Teils seiner Längsseiten mit einem Profil (6) zum Klemmen mit den profilierten Einfassungen (8) des Rahmens (9) dann, wenn das Tragbrett (2) in den Rahmen (9) eingesetzt ist, aufweist, wobei das Profil einen Körperabschnitt aufweist, der an die Bodenseite des Tragbretts durch einen Halsabschnitt angebracht ist, welcher schmaler ist als der Körperabschnitt, und wobei das Tragbrett (2) mittels des Profils versehenenlösbar mit dem mit den profilierten Einfassungen (8) Rahmen (9) verbunden ist.

## Revendications

1. Dispositif pour le support de denrées alimentaires périssables, en particulier du fromage, ledit dispositif comportant au moins un plateau support ou claie (2) qui est perméable aux gaz pour permettre aux gaz d'accéder à la claie (2) par en dessous, à travers la claie (2) jusqu'à la denrée alimentaire destinée à être placée sur la claie (2), le dispositif présentant une structure comportant au moins un châssis dans lequel la claie est disposée de façon à se déplacer dans un plan horizontal, caractérisé en ce que la claie (2) est fixée de façon amovible au châssis (9) grâce à la prévision sur le châssis de tranches profilées (8) et à la prévision sur la claie (2) le long d'au moins une partie de ses côtés longitudinaux d'un profilé (6) qui coopère en fixation avec les tranches profilées (8) du châssis (9) lorsque la claie est montée dans ledit châssis (9).

2. Dispositif selon la revendication 1, caractérisé en ce que la tranche profilée (8) du châssis (9) présente une section transversale sensiblement rectangulaire.

3. Dispositif selon l'une des revendications précédentes, caractérisé en ce que la claie (2) comporte des protubérances (10) qui font saillie au-dessus de sa surface supérieure.

4. Plateau support formant claie (2) destiné à être utilisé dans un dispositif selon l'une quelconque des revendications précédentes, ladite claie (2) étant perméable aux gaz de façon à permettre aux gaz d'avoir accès par la face inférieure de la claie (2) et au travers de la claie (2) à la denrée alimentaire destinée à être placée sur la claie (2), la claie comportant des moyens pour la disposer en la déplaçant et selon un plan horizontal dans un châssis (9) faisant partie d'une structure dudit dispositif, caractérisé en ce que la claie (2) comporte le long d'au moins une partie de ses côtés longitudinaux, un profilé (6) destiné à coopérer en fixation avec les tranches profilées (8) du châssis (9) lorsque la claie (2) est montée dans ledit châssis (9), le profilé présentant une partie de corps fixée à la face inférieure de la claie à une partie de col de largeur inférieure à ladite partie de corps, la claie (2) étant fixée de façon amovible au châssis (9) grâce aux dites tranches profilées (8) et au moyen desdits profilés.
